# EUROPEAN PATENT SPECIFICATION

(11) **EP 1 015 388 B1**
(45) Date of publication and mention of the grant of the patent: **22.01.2003**
(21) Application number: 98937267.7
(22) Date of filing: 29.07.1998
(51) Int. Cl.: C02F 1/50, A01N 35/06, E21B 41/02

(54) **METHOD FOR INHIBITING BIOGENIC SULFIDE GENERATION**
METHODE ZUR HEMMUNG BIOGENER SULFIDERZEUGUNG
PROCEDE PERMETTANT D'INHIBER LA PRODUCTION DE SULFURE BIOGENE

(30) Priority: 29.07.1997 US 901884
(43) Date of publication of application: 05.07.2000
(73) Proprietor: Arkion Life Sciences LLC, Wilmington, DE 19810 (US)
(72) Inventor: BURGER, Edward, Daniel, Plano, TX 75075 (US)
(74) Representative: Jones, Alan John
(86) International application number: US9815762
(87) International publication number: WO99006326

(56) References cited:
- EP-A- 0 591 000
- EP-A- 0 780 356
- WO-A-96/33296
- US-A- 5 385 842
- PATENT ABSTRACTS OF JAPAN vol. 096, no. 007, 31 July 1996 & JP 08 059540 A (KAWASAKI KASEI CHEM LTD), 5 March 1996

## Description

### FIELD OF INVENTION

The invention is directed to a method for inhibiting biogenic sulfide generation. In particular, it is directed to a method for inhibiting the generation of sulfide by sulfate-reducing bacteria in aqueous liquid systems and oil reservoirs.

### BACKGROUND OF THE INVENTION

In the oil industry, uncontrolled microbial growth and activity can create severe operational, environmental, and human safety problems. Problems caused or intensified by microbial growth and activity include corrosion, solids production, and hydrogen sulfide (H₂S) generation.

The microorganisms primarily responsible for H₂S generation in an anaerobic environment within the oil industry are sulfate-reducing bacteria. These organisms are ubiquitous and can grow in almost any environment. They are routinely found in waters associated with oil production systems and can be found in virtually all industrial aqueous processes, including cooling water systems, paper-making systems, and petroleum refining.

Requirements for sulfate-reducing bacteria activity and growth include an anaerobic (oxygen-free) aqueous solution containing adequate nutrients, an electron donor, and electron acceptor. A typical electron acceptor is sulfate, which produces H₂S upon reduction. A typical electron donor is a volatile fatty acid (e.g., lactic, acetic, or propionic acids), although hydrogen can also function as the electron donor. Conditions in an oil reservoir subject to seawater flooding are excellent for establishing sulfate-reducing bacteria activity. Seawater contains a significant concentration of sulfate, while connate, or indigenous formation, water contains volatile fatty acids and other required trace nutrients (e.g., nitrogen and phosphorus). Mixtures of the two waters in a reservoir provide all of the essential conditions for sulfate-reducing bacteria activity. This condition will result in sulfide generation within the reservoir, which is referred to as reservoir souring.

Hydrogen sulfide is corrosive and reacts with metal surfaces to form insoluble iron sulfide corrosion products. In addition, H₂S partitions into the water, oil, and natural gas phases of produced fluids and creates a number of problems. For instance, oil and gas which contain high levels of H₂S have a lower commercial value than low sulfide oil and gas. Removing biogenic H₂S from sour oil and gas increases the cost of these products. Hydrogen sulfide is an extremely toxic gas and is immediately lethal to humans at even small concentrations. Thus, its presence in the oil field poses a threat to worker safety. The discharge of produced waters containing high levels of H₂S into aquatic or marine environments is hazardous because H₂S reacts with oxygen and lowers the dissolved oxygen levels in the water.

Waters produced from a reservoir in association with oil production, especially those resulting from a seawater flood, will typically contain sulfate-reducing bacteria and required nutrients. Conditions in surface facilities (e.g., pipelines, vessels, tanks) are usually quite favorable for sulfate-reducing bacteria activity. Furthermore, they are capable of activity and growth in a wide range of temperatures found in the oil field. Reduced temperatures in surface facilities many times enhance microbial growth as compared to elevated temperatures within the reservoir. Oil production operations favor the growth of anaerobic sulfate-reducing bacteria since those environments are usually kept oxygen-free to avoid oxidation corrosion of steel vessels, pipelines, and tanks. However, even if such systems are aerobic, localized anaerobic conditions are maintained on the metallic surface (the substratum) beneath the biofilm due to oxygen consumption by aerobic bacteria.

Sulfate-reducing bacteria activity in surface facilities is a source of H₂S production, which causes corrosion, and results in the production of solid corrosion products, which may cause operational problems such as plugging of water-injection perforations in injection wells. (Produced waters are frequently reinjected into the formation for secondary oil recovery purposes, or may be disposed of by injection into a different portion of the reservoir.) Inhibition of sulfate-reducing bacteria activity will reduce H₂S production and will halt anaerobic corrosion of the steel surfaces, thereby reducing solids formation.

Corrosion (pitting) caused by sulfate-reducing bacteria frequently results in extensive damage. Pipe systems, tank bottoms, and other pieces of oil production equipment can rapidly fail if there are areas where microbial corrosion is occurring. If a failure occurs in a pipeline or oil storage tank bottom, the released oil can have serious environmental consequences. If a failure occurs in a high pressure water or gas line, the consequences may be worker injury or death. Any failure involves substantial repair or replacement costs.

Potential methods for mitigating sulfate-reducing bacteria activity include temperature control, metabolite removal, pH control, Eh control, radiation, filtration, salinity control, chemical control (e.g., oxidizers, biocides, acids, alkalis), solids control (e.g., pigging or scraping the internal surfaces of the pipeline), and bacteriological controls (e.g., bacteria phages, enzymes, parasitic bacteria, monoclonal antibodies, competitive microflora). Some of these methods will kill the sulfate-reducing bacteria, while others stress or disturb them sufficiently to inhibit their activity.

Most of the above methods are not practical for oil field implementation due to their cost or potential effect on the downstream processes. For example, treating of large quantities of water by heating to sterilization temperatures, by filtering out the microscopic bacteria, or by removing a nutrient (e.g., sulfate) is prohibitively expensive due to large equipment and energy requirements. Removal or the killing of bacteria from a process stream must be 100% effective or else exponential growth of surviving bacteria will recolonize downstream surfaces. In addition, all downstream surfaces must be sterilized (i.e., bacteria-free) prior to implementation of a sulfate-reducing bacteria mitigation process upstream or else sulfate-reducing bacteria growth will continue within the biofilm.

Two typical methods of controlling sulfate-reducing bacteria in oil field pipeline systems are pigging and biocide treatments. Pigging is required to remove or disrupt the biofilm on the pipe surface. Pigging can also remove many of the iron sulfide deposits which may be acting as cathodes to the corroding anodic areas. While pigging will be substantially effective where thick biofilms are present, thin biofilms and thin iron sulfide deposits are not appreciably affected by the scraping action of pigs. Subsequently, biocides and surfactant-biocide treatments are used extensively to control bacterial activity in oil field systems. Combination treatments in conjunction with pigging are more effective than the chemical treatments alone. However, treatments must be made routinely on a fixed schedule or else the bacteria population increases significantly and control becomes even more difficult. Monitoring the effectiveness of treatments must include the sessile bacteria, for the reason that the numbers of planktonic bacteria following a biocide treatment may have no correlation with the sessile bacteria involved with the corrosion process.

It has proved difficult to eradicate biofilms from pipelines because of their great resistance to bactericidal agents. The concentration of biocides required to kill bacteria in the sessile phase (in the biofilm) are often much higher than those required for bacteria in the planktonic or free-floating phase. (Blenkinsopp, S. A., Khoury, A. E. and Costerton, J. W., "Electrical enhancement of biocide efficacy against *pseudomonas aeruginosa* biofilms," Applied and Environmental Microbiology, 58, No. 11, p. 3770, 1992.) This may be due to the role of the abundant exopolysaccharide matrix of the biofilm. It has been suggested that the diffusion resistance in the biofilm mode of growth can be overcome by the imposition of a relatively weak DC electric field so that the biofilm bacteria can readily be killed by concentrations of biocides only one to two times those necessary to kill planktonic cells of the same organism. While this new technology may be technically effective, it appears to be impractical to apply it in a commercial pipeline system.

### SUMMARY OF THE INVENTION

In the broadest aspect, the invention is directed to a non-biocidal method for inhibiting biogenic sulfide generation in a system having an anaerobic biofilm containing active sulfate-reducing bacteria comprising contacting the biofilm with a liquid dispersion of an anthrahydroquinone compound selected from the group consisting of 9,10-dihydroxyanthracene, 9,10-dihydro-9,10-dihydroxyanthracene and mixtures thereof by which the anthrahydroquinone compound passes through the pores of the biofilm and is diffused within the biofilm to effect contact with the sulfate-reducing bacteria.

The biofilm may be on the surface of the metal in contact with a turbulently flowing liquid in which the anthrahydroquinone compound is dispersed.

Alternatively the biofilm may be on the surface of the metal in contact with a static liquid in which the anthrahydroquinone compound is dispersed.

Preferably the dispersion of anthrahydroquinone compound is introduced into liquid flowing through a pipe as a slug, the volume of which is sufficient to provide contact with a given point within the pipe for at least one minute.

### BRIEF DESCRIPTION OF THE DRAWINGS

The Drawing consists of two figures of which Figure 1 is a schematic representation of a typical biofilm and Figure 2 is a schematic representation of the valving involved in the use of pipeline scrapers (pigging).

The figures were filed after the filing date of the application.

### DETAILED DESCRIPTION

### Biofilm:

A biofilm is a heterogeneous accumulation of bacterial colonies attached to a substratum. Though characterized as a "biofilm," it is neither completely biological, nor is it continuous in the conventional sense of the word "film."

Recent studies indicate that a biofilm consists of discrete bacterial microcolonies immobilized on a substratum immersed in an aqueous medium, the microcolonies being separated by water channels through which convective flow can take place. The microbial cells are held together and held to the substratum surface by extracellular polymeric substances. Within the context of the invention, the medium (also called "the substrate") is an anaerobic liquid, and at least a significant portion of the bacteria in the biofilm are sulfate-reducing. However, the biofilm can contain other co-existing bacterial species. In addition, the biofilm can contain extraneous material such as exoenzymes, solutes and inorganic inclusions such as corrosion products, silt and clay particles.

Figure 1 is a schematic representation of a biofilm which is attached to a metal substratum 1. As shown, a continuous thin layer of bacteria 3 is directly attached to the substratum 1. However, this layer 3 is not always continuous and its continuity does not enter into the efficacy of the invention in this environment. Attached to the thin bacterial layer 3, and/or directly to the substratum 1, as the case may be, is a series of bacterial cell clusters 5 having channels between them through which the aqueous medium 7 can flow. Because of the porosity of the bacterial cell clusters 5, the aqueous medium 7 and materials dispersed therein are able to enter the structure and contact bacteria within the structure.

### Anthrahydroquinone Functionality and Applications

While biocides are aimed at killing sulfate-reducing bacteria, anthrahydroquinones inhibit their activity. Results from studies indicate that anthrahydroquinone blocks the production of adenosine triphosphate by sulfate-reducing bacteria, thereby removing the bacteria's ability to respire via sulfate reduction. Without sulfate reduction, H₂S is not produced by the bacteria.

Biocides are very reactive, a property which is likely responsible for their limited effectiveness in penetrating the biofilms at low dosages. The extraordinary effectiveness of various forms of anthrahydroquinone lies in their non-reactivity. These products are transported into the biofilm, diffuse through the biofilm voids, and then diffuse or are randomly transported by Brownian motion into the bacterial microcolonies without reduction in concentration as a consequence of a reaction with biofilm constituents. These anthrahydroquinone materials are unaffected by other bacteria or the exopolysaccharide matrix present in the biofilm.

Even though solid particles of anthrahydroquinone are required to inhibit the sulfate-reducing bacteria activity, the anthrahydroquinone can be introduced into the microbial environment in several physical forms. The anthrahydroquinone compound can be introduced as a dispersion of these solid particles while an ionic (sodium salt) form of anthrahydroquinone will allow the anthrahydroquinone to be solubilized in an anaerobic caustic solution with pH greater than 12 and preferably greater than 13. The salt stays soluble if the pH of the solution remains above about 12. Precipitation of solid anthrahydroquinone takes place as the pH is reduced below this value. In the soluble form, or with a slight amount of precipitated anthrahydroquinone (typically in colloidal form), anthrahydroquinone is in ionic form or consists as extremely small (submicron-sized) particles. The anthrahydroquinone ions or colloidal particles will then be able to move freely in the biofilm, thus contacting sulfate-reducing bacteria cells easily. Contact of anthrahydroquinone with the sulfate-reducing bacteria, and partitioning of the anthrahydroquinone into the cell membrane, blocks the organism's adinosine triphosphate production. In addition, decreases in pH in the biofilm (due to acid production from other bacteria in the biofilm or due to a sweeping of lower pH fluid through the pipe) will precipitate more small anthrahydroquinone particles from the solution within the biofilm. This will expose the sulfate-reducing bacteria within the biofilm to additional anthrahydroquinone particles, furthering the efficacy of the anthrahydroquinone treatment.

The alkali metal hydroxide solution, e.g. NaOH solution, (caustic solution) the carrier of the solubilized anthrahydroquinone, also adds to the effectiveness of the treatment by functioning as a surfactant. The caustic solution helps to disrupt the biofilm and increases the tendency for the biofilm to slough from the pipe wall. The high pH solution also shocks all of the bacteria within the biofilm, reducing all activity even in the absence of the anthrahydroquinone. Field studies in a wastewater treatment system have shown that biogenic sulfide production was mitigated with both caustic and soluble anthrahydroquinone treatments, but the maximum degree of inhibition was higher with the soluble anthrahydroquinone treatment and the restoration of the sulfide production to the original level occurred quicker with the caustic treatment.

The protocol for implementation of a treatment with soluble anthrahydroquinone salt is relatively simple. The solution typically contains active anthrahydroquinone at a concentration of about 10%. The solution is pumped from a storage tank into the pipeline transporting the water to be treated. Typically a slug dosage of solution is injected. Enough solution is injected to yield a slug in the pipeline at a concentration of about 250 ppm by wt. active anthrahydroquinone for a contact time of about 10 minutes. In some cases the slug may only need to be 50 ppm for 1 minute, while other more difficult systems to treat might require 1000 ppm for 30 minutes to inhibit sulfide production adequately. The slug dosage requirement is a function of biofilm composition, thickness, and tenacity and also the presence of hydrocarbon constituents associated with the biofilm. Velocity of the flowing water, pipe diameter and length, and the pH and buffering capacity of the water will also affect the soluble anthrahydroquinone requirements. Dispersion of the slug as it travels down the pipeline tends to reduce the pH of the slug ahead of and behind the slug. Dispersion is a function of the pipe diameter, number of bends in the pipe, and distance the slug has traveled. (Perkins, T. K. and J. A. Euchner, "Safe purging of natural gas pipelines," SPE Production Engineering, p. 663, 1988.) The slug is injected so that dispersion is minimized and the high pH length (i.e., the bulk slug) is sufficient to give at least one minute of contact time at that high pH. High anthrahydroquinone concentrations for short contact times are typically more effective than low concentrations for long times, but circumstances may dictate that the concentration of the injected slug be limited. One such circumstance is when the water being treated contains soluble metals (especially calcium) and sufficient bicarbonate ion such that increasing the pH of the water to above about 9.5 will cause scale formation. If too high an amount of the soluble anthrahydroquinone salt is introduced into this water, then this will occur. In addition, the scale formation process will buffer the pH at a level which will cause anthrahydroquinone to precipitate from solution. The combined precipitate of scale and anthrahydroquinone will decrease the overall treatment effectiveness. Limiting the amount of soluble high pH solution injected into this water so that the final water pH is below about 9.5 will minimize the amount of scale formation while still maintaining adequate anthrahydroquinone solubility. If the pH is less than about 9.0, then no scale will form. However, significant anthrahydroquinone will precipitate due to the low pH, thereby reducing the overall effectiveness of the treatment.

The frequency of the anthrahydroquinone slug injection is based on sulfide monitoring results. Injection needs to be only frequent enough to maintain the sulfide concentration below a predetermined level. Typically, injection is at a one-week interval, although the frequency might be as often as every other day or as infrequent as once per month. Low concentration daily injections are typically needed for short length piping systems, such as on an oil production platform, while high concentration weekly or monthly injections are typically needed for long length water transportation pipelines.

The efficacy of the treatment is increased by maintaining a pipeline pigging program. Pigging the line prior to anthrahydroquinone treatments significantly increases the anthrahydroquinone effectiveness by disturbing the biofilm, reducing its thickness, and removing solid iron sulfide deposits.

Treatments with aqueous dispersions of solid particles of anthrahydroquinone are typically not cost-effective for most applications since anthrahydroquinone oxidizes rapidly in air to anthraquinone. Due to this property, it is difficult to manufacture pure anthrahydroquinone economically. In addition, the solid anthrahydroquinone must be prepared as an aqueous dispersion of extremely small particles (having an average particle size no larger than 2.5 micrometers, preferably less than about 2 micrometers) to effect inhibition of the sulfate-reducing bacteria activity. This preparation must be accomplished in an anaerobic environment, or else anthraquinone will be the end product. However, anthraquinone itself is an inhibitor of biogenic sulfide generation. Control of pH is not important in treatments with an aqueous dispersion of anthrahydroquinone. As with soluble materials, treatments with insoluble anthrahydroquinone should be such that a high anthrahydroquinone concentration is maintained for an adequate contact time as the slug travels down the pipeline.

The preferred, more cost-effective treatment is to inject the water soluble dialkali metal salt of anthrahydroquinone into the flowing water to be treated. Precipitation of the molecular anthrahydroquinone (due to a pH reduction) will be in the form of colloidal particles with a size of typically less than one micrometer. These small particles can then easily penetrate into the biofilm, contact the sulfate-reducing bacteria, and effect sulfide-production inhibition effectively due to their small particle size.

In long pipelines with numerous bends and/or in pipelines in which the flow is laminar, dispersion of the water slug containing the alkali metal salt of the anthrahydroquinone may become significant. This will cause the anthrahydroquinone concentration in the slug to be reduced below intended levels as the leading and trailing edges of the slug mix with the flowing water. In addition, the lower pH of these "tails" will result in anthrahydroquinone precipitation and possibly reduced treatment effectiveness. The leading edge "tail" can be eliminated by launching a pig into the pipeline immediately prior to beginning anthrahydroquinone solution injection. The pig will act as a barrier for mixing of the anthrahydroquinone-water slug with water even with low Reynolds Number flow and/or numerous bends in the pipeline. In addition, the pig helps to reduce the thickness of the biofilm with its scraping action, and will remove many of the iron sulfide and other solid deposits. All of these factors will help increase the effectiveness of the anthrahydroquinone treatment. However, a pig trailing the anthrahydroquinone-water slug is detrimental to the treatment, since it would remove anthrahydroquinone-which has penetrated into the biofilm.

Enhanced effectiveness of the anthrahydroquinone treatment for some applications can result from the combined utilization of anthrahydroquinone and a biocide or oxidizer. The biocide/oxidizer might be needed to reduce the amount of biofouling on a surface, while the anthrahydroquinone is responsible for long-duration inhibition of the sulfate-reducing bacteria activity. This is especially true for applications in which a biofouling problem or thick biofilm has been established prior to anthrahydroquinone treatment. Anthrahydroquinone alone will penetrate the biofilm, leaving the sulfate-reducing bacteria inactive, but other bacteria and their resultant biotic and abiotic products (especially iron sulfides) will still be present at the wall and possibly will contribute to additional problems such as corrosion. A combined anthrahydroquinone-biocide application, such as alternating materials or periodically treating with a biocide in place of an anthrahydroquinone treatment, is more effective than the use of either material separately.

### Anthrahydroquinone Compounds and Formulation

The anthrahydroquinone compounds used in the method of the invention are selected from anthrahydroquinone itself (9,10-dihydroxyanthracene), 9,10-dihydro-9,10-dihydroxyanthracene and mixtures thereof. The water-soluble forms of these compounds are the alkali metal salts thereof.

More particularly, both water-insoluble and water-soluble forms can be used. The non-ionic compounds are largely insoluble in aqueous systems, while ionic derivatives are di-alkali metal salts and are largely soluble in water. The water soluble forms are stable only in high pH anaerobic fluids. Low pH fluids (pH less than about 12) will result in the formation of the insoluble molecular anthrahydroquinone. Aerobic solutions will cause oxidation of the anthrahydroquinones to anthraquinone. Thus, anthrahydroquinones will not exist for long periods of time in an aerated environment. For these reasons, anthrahydroquinone treatments are usually implemented with the soluble form in a caustic solution. NaOH solutions are preferred over other alkali metals for economic reasons.

Unlike the use of biocides for treating sulfate-reducing bacteria, the anthrahydroquinone compounds used in the invention do not kill the sulfate-reducing bacteria, but merely inhibit the sulfide producing activity. Interestingly enough, the active species of alkali metal salt of the anthrahydroquinone compound is believed to be water-insoluble compounds which apparently modify the electron transfer process of the sulfate-reducing bacteria. In order for the water-insoluble compounds to be effective, they must be very finely divided to an extent that they can be dispersed into the biofilm. A lowering of the alkali metal salt solution pH will form extremely small particles of biochemically active anthrahydroquinone, which will disperse easily into the biofilm and coat the substratum.

Notwithstanding the fact that the active species seems to be the insoluble form of the anthrahydroquinone compound, it is nevertheless preferred to use the water soluble anthrahydroquinone form because it diffuses into the biofilm and thus contacts the sulfate-reducing bacteria more readily. The activity of the ionic form of anthrahydroquinone seems to be derived from its conversion from the ionic (i.e., metal alkali salt) form to the non-ionic (i.e., molecular) form by which it is precipitated as very fine particles which attach to the sulfate-reducing bacteria.

Whether the soluble or insoluble anthrahydroquinone is used, it has been observed that the functional attachment of the anthrahydroquinone particles to the bacteria is limited in time by metabolism of the particles by the sulfate-reducing bacteria. Thus, application of the treating medium must be repeated periodically in order to maintain inhibition effectiveness.

Preferably an aqueous alkaline solution of the anthrahydroquinone compound is added to the flowing liquid continuously.

The compositions are added to the medium containing the sulfate-reducing bacteria in a quantity sufficient to inhibit sulfide production. As little as 0.1 ppm by weight in the aqueous medium gives significant inhibition for many uses. In the preferred method the concentration of active anthrahydroquinone in the medium is at least 1 ppm, preferably 1-50 ppm. Greater concentrations, such as up to 1000 ppm, can be used, especially for treating pipelines of great length.

### Pigging Procedure:

Figure 2 is a schematic representation of a typical pipeline for transportation of liquids which has facilities for pigging (or scraping) operations. Liquid flow through the line is directed through the main pipeline 1 through upstream valve Band downstream valve G, both of which are open during normal pipeline operation. Valve C in starter line 3 and valve A in scraper outlet line 7 are closed and valve D in pressurization line 9 is open during normal pipeline operation.

When it is desired to launch the scraper (pig), valve C, which connects the main pipeline 1 with outgoing scraper barrel 5 via line 3, is opened slowly to raise the pressure in launch barrel 5 containing the scraper, to full pipeline pressure. After the launch barrel 5 has reached full pipeline pressure, valve D in pressurization line 9 is closed and scraper outlet valve A in scraper outline line 7 is opened. Then, by pinching down slowly on valve B, the differential pressure within the launch barrel rises and overcomes the friction between the scraper and the launching barrel. The scraper passes slowly through scraper outlet valve A and scraper outlet line 7 into the full flow of the main pipeline 1. After the scraper is launched, valve B is fully opened and valves A and C are closed. In addition, scraper return line valve F, main pipeline valve G and scraper receiver line valve H are opened. The scraper then proceeds through the pipeline 1, scraper return line 11 and valve F into receiving barrel 13.

As the scraper passes the juncture of inhibitor feed line 17 and the main pipeline 1, inhibitor feed valve E is opened to inject anthrahydroquinone compound into the main pipeline. Valve E is then closed as soon as the chosen quantity of anthrahydroquinone compound has been injected into the main pipeline 1.

As soon as the scraper reaches receiver barrel 13, main pipeline valve G remains fully open and valves F and H are closed. Upon venting the pressure within receiver barrel 13, it can be opened to remove the scraper.

### EXAMPLES

### Example 1

### Anthrahydroquinone Inhibition of Sulfide Production by Desulfovibrio desulfuricans G100A.

A frozen 1 mL culture of *Desulfovibrio desulfuricans* G100A was thawed, injected into a septum-capped tube containing 10 mL reduced modified BTZ-3 medium, and incubated at 30C for three days (All of the transfers, materials additions, and samplings during this experiment were performed in an anaerobic chamber at ambient temperature. Incubation took place outside of this chamber.) Five ml of this culture were transferred into a 60-ml septum-capped serum bottle containing 50 ml of the reduced BTZ-3 medium and incubated overnight at 30C. Three ml of this culture were transferred to 50 ml of modified Postgate's B medium in 60-mL serum bottles capped with septum closure. A total of 6 cultures was thus prepared. Four were then treated with two duplicate concentrations (100 ppm and 500 ppm) of an anthrahydroquinone salt solution described below by injecting the material with a microliter syringe into the septum bottles and shaking the bottles. Two of the six bottles were left as untreated controls.

The anthrahydroquinone material tested had been prepared by reacting appropriate amounts of anthraquinone, sodium borohydride, sodium hydroxide, and water at 80C-85C in a nitrogen atmosphere for 6 hours, heating the resultant liquid to 95C for two hours to decompose unreacted sodium borohydride, and then cooling the solution to ambient temperature. The resultant bright-red solution with pH>13 was filtered to remove any unreacted anthraquinone and solid impurities and was stored under a nitrogen environment. Nuclear magnetic reasonance analysis of the solution indicated that it was a mixture of sodium salts of at least three reduced derivatives of anthraquinone: 9,10-dihydroxyanthracene, 9,10-dihydroanthrahydroquinone, and oxyanthrone. Acidification, filtration, and oxidation of a sample of this solution converted the salts to anthraquinone. Quantitative analysis indicated that the solution contained 10.1 wt% equivalent anthraquinone.

After the bottles were treated, time zero sulfide measurements were made on each culture according to the following procedure:
1) Remove a 0.5 mL sample and inject it into a 3-ml vacutainer containing 0.1 ml of 1N HCl.
2) Allow the vacutainer sample to sit for 10 minutes and then remove it from the anaerobic chamber. Using a gas-tight syringe, remove 0.15 ml of the gas phase. Inject this gas slowly into a parafilm-covered cuvette containing 1.8 mL of pH 8 water, remove the needle quickly through the parafilm, and recover the cuvette with excess parafilm initially in place. Invert the cuvette several times.
3) Add 0.2 mL of N,N-dimethyl-p-phenylenediamine (DPD) reagent to the cuvette. Invert the cuvette several times and allow 30 minutes for a blue color to develop.
4) Read the OD₆₇₀ on a spectrophotometer. Check to make sure that the OD₆₇₀ is within the linear portion of the calibration curve to be assured that the reading is proportional to the sulfide concentration in the test bottle.

After samples were taken for the time zero sulfide readings, the serum bottles were removed from the anaerobic chamber and placed in a 30C incubator. Samples were taken from the serum bottles for sulfide analyses at 21, 27, 45, 69 and 131 hours from time zero by the same procedure described above. Results from the sulfide analyses, given as OD₆₇₀ readings, are shown in Table I.

The results show conclusively that the anthrahydroquinone salt solution effectively inhibited sulfide generation by the *Desulfovibrio desulfuricans* G100A.

**TABLE 1**

| **Inhibition of Sulfide Generation By Use of Anthrahydroquinone Salt Solution** | | | | | | |
|---|---|---|---|---|---|---|
| **Time (hrs)** | **0** | **21** | **27** | **45** | **69** | **131** |
| **Concentration (ppm)** | OD₆₇₀ (Average of samples) | | | | | |
| 0 | 0.175 | 0.988 | 0.949 | 1.397 | 1.186 | 1.366 |
| 100 | 0.258 | 0.336 | 0.426 | 1.251 | 1.443 | --- |
| 500 | 0.227 | 0.226 | 0.196 | 0.333 | 0.850 | 1.569 |

These data show clear inhibition of hydrogen sulfide generation for over 27 hours even at anthrahydroquinone salt solution concentrations as low as 100 ppm* by weight and for over 69 hours at solution concentrations of 500 ppm**. The data are not so unequivocal for 69 and 131 hours primarily due to two factors: (1) because the test was static, insoluble anthrahydroquinone particles formed during the test tend to settle and therefore have less contact with the bacteria dispersed within the test medium; and (2) there is some agglomeration of anthraquinone particles which reduces the surface area of the particles. Thus the inhibition is lessened. Despite the severity of the static inhibition test, the data show clearly that anthrahydroquinone particles effectively inhibit hydrogen sulfide generation at extremely low concentrations so long as contact efficiency is maintained.
* 100 ppm by weight solution concentration is equivalent to 13 ppm of the anthrahydroquinone salt.
** 500 ppm by weight solution concentration is equivalent to 65 ppm of the anthrahydroquinone salt.

### Example 2

### Anthrahydroquinone Inhibition of Sulfide Production by Desulfovibrio desulfuricans G100A.

A frozen 1 mL culture of *Desulfovibrio desulfuricans* G100A was thawed, injected into a septum-capped tube containing 10 ml reduced modified BTZ-3 medium, and incubated at 30C for three days. (All of the transfers, materials additions, and samplings during this experiment were perforded in an anaerobic chamber at ambient temperature. Incubation took place outside of this chamber.) Five ml of this culture were transferred into a 60-ml septum-capped serum bottle containing 50 ml of the reduced BTZ-3 medium and incubated overnight at 30C. Three ml of this culture were transferred to 50 ml of modified Postgate's B medium in 60-ml serum bottles capped with septum closure. A total of 6 cultures was thus prepared. Four were then treated with two duplicate concentrations (140 ppm and 700 ppm) of an anthrahydroquinone salt solution described below by injecting the material with a microliter syringe into the septum bottles and shaking the bottles. Two of the six bottles were left as untreated controls.

The anthrahydroquinone material tested had been prepared by reacting appropriate amounts of anthraquinone, formamidine sulfinic acid, sodium hydroxide, and water at room temperature for greater than 24 hours. HPLC analysis of the resultant deep-red solution indicated that it contained an equivalent 7.13% of 9,10-anthraquinone. Another solution, which was prepared with the same reactants, was subsequently neutralized with dilute HCI under a nitrogen environment to yield a yellow anthrahydroquinone precipitate. While remaining under the nitrogen environment, this slurry was filtered and the cake was washed with de-ionized water to remove the water soluble by-product impurities. Following this, the washed solids were resuspended in de-aerated water and realkalized with de-aerated sodium hydroxide solution. This deep-red solution was then dried in a rotary evaporator to form a microcrystalline solid which was subsequently analyzed by nuclear magnetic resonance. The spectrum showed that the solid was the pure substance 9,10-dihydroxyanthracene, disodium salt.

After the bottles were treated, time zero sulfide measurements were made on each culture according to the following procedure:
1) Remove a 0.5 ml sample and inject it into a 3-ml vacutainer containing 0.1 ml of 1N HCl.
2) Allow the vacutainer sample to sit for 10 minutes and then remove it from the anaerobic chamber. Using a gas-tight syringe, remove 0.15 ml of the gas phase. Inject this gas slowly into a parafilm-covered cuvette containing 1.8 ml of pH 8 water, remove the needle quickly through the parafilm, and recover the cuvette with excess parafilm initially in place. Invert the cuvette several times.
3) Add 0.2 ml of n,n-dimethyl-p-phenylenediamine (DPD) reagent to the cuvette. Invert the cuvette several times and allow 30 minutes for a blue color to develop.
4) Read the OD₆₇₀ on a spectrophotometer. Check to make sure that the OD₆₇₀ was within the linear portion of the calibration curve to be assured that the reading is proportional to the sulfide concentration in the test bottle.

After samples were taken for the time zero sulfide readings, the serum bottles were removed from the anaerobic chamber and placed in a 30C incubator. Samples were taken from the serum bottles for sulfide analyses at 21, 27, 45, 69 and 141 hours from time zero by the same procedure described above. Results from the sulfide analyses, given as OD₆₇₀ readings, are shown in Table 2.

The results show conclusively that the anthrahydroquinone salt solution effectively inhibited sulfide generation by the *Desulfovibrio desulfuricans* G100A.

**TABLE 2**

| **Inhibition of Sulfide Generation By Use of 9,10-Dihydroxyanthracene, Disodium Salt Solution** | | | | | | |
|---|---|---|---|---|---|---|
| **Time (hrs)** | **0** | **21** | **27** | **45** | **69** | **141** |
| **Concentration (ppm)** | OD₆₇₀ (Average of samples) | | | | | |
| 0 | 0.218 | 1.184 | 1.176 | 1.085 | 1.327 | 1.319 |
| 140 | 0.169 | 0.245 | 0.436 | 1.289 | 1.298 | --- |
| 700 | 0.202 | 0.134 | 0.206 | 0.326 | 0.796 | 1.513 |

These data show clear inhibition of hydrogen sulfide generation for over 27 hours even at anthrahydroquinone salt solution concentrations as low as 140 ppm* by weight and for over 69 hours at solution concentrations of 700 ppm**.
* 140 ppm by weight solution concentration is equivalent to 13 ppm of the 9,10-dihydroxyanthracene, disodium salt.
** 700 ppm by weight solution concentration is equivalent to 65 ppm of the 9,10-dihydroxyanthracene, disodium salt.

### Example 3

### Comparison of Two Different Anthrahydroquinone Salt Solutions at Inhibiting Sulfide Production by Desulfovibrio desulfuricans G100A.

A frozen 1 mL culture of *Desulfovibrio desulfuricans* G100A was thawed, injected into a septum-capped tube containing 10 ml reduced modified BTZ-3 medium, and incubated at 30C for three days. (All of the transfers, materials additions, and samplings during this experiment were perforded in an anaerobic chamber at ambient temperature. Incubation took place outside of this chamber.) Five ml of this culture were transferred into a 60-ml septum-capped serum bottle containing 50 ml of the reduced BTZ-3 medium and incubated overnight at 30C. Three ml of this culture were transferred to 50 ml of modified Postgate's B medium in 60-ml serum bottles capped with septum closure. A total of 14 cultures was thus prepared. Twelve were then treated with three duplicate concentrations (5, 10, and 50 mg/l of equivalent 9,10-anthraquinone) of two different anthrahydroquinone salt solutions described below by injecting the material with a microliter syringe into the septum bottles and shaking the bottles. Two of the 14 bottles were left as untreated controls.

One of the anthrahydroquinone materials tested (designated SSC) was prepared as described in Example 1. The second (designated SAQ) had been obtained from Kawasaki Kasei Chemical Ltd, which specified the material to be a caustic solution of the disodium salt of 1,4-dihydro-9,10-anthracenediol. The major difference in these materials is that SSC was a solution of 9,10-dihydro-9,10-anthracenediol and 9,10-anthracenediol disodium salts (plus oxyanthrone salt) while SAQ was a solution of a pure 1,4-dihydro-9,10-anthracenediol disodium salt. The equivalent 9,10-anthraquinone content of each was determined by acidifying a known amount of each with hydrochloric acid, collecting the resultant anthrahydroquinone precipitate by filtration, washing the filter cake well with deionized water, drying the washed cake in an aerated oven to oxidize the anthrahydroquinone to 9,10-anthraquinone, and then weighing the resultant dried solid. The 9,10-anthraquinone content of the SSC was 10.3 weight % and that of the SAQ was 22.7 weight %.

After the bottles were treated, time zero sulfide measurements were made on each culture according to the procedure presented as follows:
1) Remove a 0.5 ml sample and inject it into a 3-ml vacutainer containing 0.1 ml of 1N HCl.
2) Allow the vacutainer sample to sit for 10 minutes and then remove it from the anaerobic chamber. Using a gas-tight syringe, remove 0.15 ml of the gas phase. Inject this gas slowly into a parafilm-covered cuvette containing 1.8 ml of pH 8 water, remove the needle quickly through the parafilm, and recover the cuvette with excess parafilm initially in place. Invert the cuvette several times.
3) Add 0.2 ml of n,n-dimethyl-p-phenylenediamine (DPD) reagent to the cuvette. Invert the cuvette several times and allow 30 minutes for a blue color to develop.
4) Read the OD₆₇₀ on a spectrophotometer.

After samples were taken for the time zero sulfide readings, the serum bottles were removed from the anaerobic chamber and placed in a 30C incubator. Samples were taken from the serum bottles for sulfide analyses at 21, 27, and 45 hours from time zero by the same procedure described above. Results from the sulfide analyses, given as OD₆₇₀ readings, are shown in Table 3.

**TABLE 3**

| **Inhibition of Sulfide Generation By Use of Anthracenediol, Disodium Salt Solutions** | | | | | |
|---|---|---|---|---|---|
| | **Time (Hours)** | **0** | **21** | **27** | **45** |
| **Material** | **Concentration (mg/L)** | | **OD**_{**670**} **(Average of Samples)** | | |
| Control | 0 | 0.502 | 1.724 | 2.032 | 2.564 |
| | | | | | |
| SSC | 5 | 0.358 | 1.118 | 1.517 | 2.776 |
| SAQ | 5 | 0.406 | 1.613 | 1.947 | 2.704 |
| | | | | | |
| SSC | 10 | 0.510 | 0.969 | 1.039 | 2.556 |
| SAQ | 10 | 0.419 | 1.451 | 1.714 | 2.688 |
| | | | | | |
| SSC | 50 | 0.305 | 1.061 | 1.255 | 2.615 |
| SAQ | 50 | 0.403 | 1.565 | 1.522 | 2.681 |

The results show clearly that, at each equivalent 9,10-anthraquinone concentration, the anthrahydroquinone salt solution designated SAQ (comprised of 1,4-dihydro-9,10-anthracenediol, disodium salt) was inferior to SSC, a mixture of anthrahydroquinone salts which did not contain the 1,4-dihydro substance, at inhibiting sulfide generation by the *Desulfovibrio desulfuricans* G100A.

## Claims

1. A non-biocidal method for inhibiting biogenic sulfide generation in a system having an anaerobic biofilm containing active sulfate-reducing bacteria comprising contacting the biofilm with a liquid dispersion of anthrahydroquinone compound selected from the group consisting of 9,10-dihydroxyanthracene, 9,10-dihydro-9,10-dihydroxy anthracene and mixtures thereof by which the anthrahydroquinone compound is passed through the pores of the biofilm and is diffused within the biofilm to effect contact with the sulfate-reducing bacteria.

2. The method of claim 1 in which the anthrahydroquinone compound is in the form of solid particles having an average particle size no larger than 2.5 micrometers.

3. The method of claim 1 in which the anthrahydroquinone compound is dissolved in an aqueous solvent.

4. The method of claim 3 in which the solution of anthrahydroquinone compound has a pH of at least 12.

5. The method of claim 1 in which the biofilm is on the surface of the metal in contact with a turbulently flowing liquid in which the anthrahydroquinone compound is dispersed.

6. The method of claim 1 in which the biofilm is on the surface of the metal in contact with a static liquid in which the anthrahydroquinone compound is dispersed.

7. The method of claim 1 in which the anthrahydroquinone-compound is 9,10-dihydroxyanthracene.

8. The method of claim 1 in which the anthrahydroquinone compound is 9,10-dihydro-9,10 dihydroxy anthracene.

9. The method of claim 3 in which the anthrahydroquinone compound is in the form of an alkali metal salt.

10. The method of claim 5 in which dispersion of anthrahydroquinone compound is introduced into liquid flowing through a pipe as a slug the volume of which is sufficient to provide liquid contact with a given point within the pipeline of at least one minute.

11. The method of claim 3 in which the slug is introduced into the pipe immediately following a pig.

12. The method of claim 5 in which an aqueous alkaline solution of the anthrahydroquinone compound is added to the flowing liquid continuously.

13. The method of claim 1 in which the anthrahydroquinone compound is metabolized by the sulfate-reducing bacteria.

## Patentansprüche

1. Nicht-biozides Verfahren zur Hemmung biogener Sulfiderzeugung in einem System mit einem anaeroben Biofilm, der aktive Sulfat-reduzierende Bakterien enthält, umfassend das Inkontaktbringen des Biofilms mit einer flüssigen Dispersion einer Anthrahydrochinonverbindung, ausgewählt aus der Gruppe, bestehend aus 9,10-Dihydroxyanthracen, 9,10-Dihydro-9,10-dihydroxyanthracen und Gemischen davon, wodurch die Anthrahydrochinonverbindung durch die Poren des Biofilms fließt und sich innerhalb des Biofilms ausbreitet, wodurch Kontakt mit den Sulfat-reduzierenden Bakterien bewirkt wird.

2. Verfahren nach Anspruch 1, wobei die Anthrahydrochinonverbindung in der Form von Feststoffteilchen vorliegt, die eine mittlere Teilchengröße von nicht größer als 2,5 Mikrometer aufweisen.

3. Verfahren nach Anspruch 1, wobei die Anthrahydrochinonverbindung in einem wässrigen Lösungsmittel gelöst ist.

4. Verfahren nach Anspruch 3, wobei die Lösung der Anthrahydrochinonverbindung einen pH von mindestens 12 aufweist.

5. Verfahren nach Anspruch 1, wobei der Biofilm auf der Oberfläche des Metalls in Kontakt mit einer turbulent fließenden Flüssigkeit ist, in welcher die Anthrahydrochinonverbindung verteilt ist.

6. Verfahren nach Anspruch 1, wobei der Biofilm auf der Oberfläche des Metalls in Kontakt mit einer statischen Flüssigkeit ist, in welcher die Anthrahydrochinonverbindung verteilt ist.

7. Verfahren nach Anspruch 1, wobei die Anthrahydrochinonverbindung 9,10-Dihydroxyanthracen ist.

8. Verfahren nach Anspruch 1, wobei die Anthrahydrochinonverbindung 9,10-Dihydro-9,10-dihydroxyanthracen ist.

9. Verfahren nach Anspruch 3, wobei die Anthrahydrochinonverbindung in der Form eines Alkalimetallsalzes vorliegt.

10. Verfahren nach Anspruch 5, wobei die Dispersion der Anthrahydrochinonverbindung in eine Flüssigkeit, die durch eine Leitung strömt, als ein Pfropfen eingebracht wird, dessen Volumen ausreichend ist, flüssigen Kontakt mit einer gegebenen Stelle in der Leitung von mindestens einer Minute zu liefern.

11. Verfahren nach Anspruch 3, wobei der Pfropfen in die Leitung unmittelbar einem Schaber folgend eingebracht wird.

12. Verfahren nach Anspruch 5, wobei eine wässrige alkalische Lösung der Anthrahydrochinonverbindung kontinuierlich zu der strömenden Flüssigkeit gegeben wird.

13. Verfahren nach Anspruch 1, wobei die Anthrahydrochinonverbindung durch die Sulfat-reduzierenden Bakterien metabolisiert wird.

## Revendications

1. Procédé non biocide pour inhiber la production de sulfure biogène dans un système comportant un biofilm anaérobie contenant des bactéries actives réductrices de sulfate, ledit procédé comprenant la mise en contact du biofilm avec une dispersion liquide d'un composé d'anthrahydroquinone choisi dans le groupe constitué par le 9,10-dihydroxyanthracène, le 9,10-dihydro-9,10-dihydroxyanthracène et leurs mélanges, le composé d'anthrahydroquinone passant à travers les pores du biofilm et diffusant dans le biofilm pour être en contact avec les bactéries réductrices de sulfate.

2. Procédé selon la revendication 1, dans lequel le composé d'anthrahydroquinone est sous forme de particules solides ayant une granulométrie moyenne ne dépassant pas 2,5 micromètres.

3. Procédé selon la revendication 1, dans lequel le composé d'anthrahydroquinone est dissous dans un solvant aqueux.

4. Procédé selon la revendication 3, dans lequel la solution du composé d'anthrahydroquinone possède un pH au moins égal à 12.

5. Procédé selon la revendication 1, dans lequel le biofilm se trouve à la surface du métal en contact avec un liquide en écoulement turbulent dans lequel le composé d'anthrahydroquinone est dispersé.

6. Procédé selon la revendication 1, dans lequel le biofilm se trouve à la surface du métal en contact avec un liquide statique dans lequel le composé d'anthrahydroquinone est dispersé.

7. Procédé selon la revendication 1, dans lequel le composé d'anthrahydroquinone est le 9,10-dihydroxyanthracène.

8. Procédé selon la revendication 1, dans lequel le composé d'anthrahydroquinone est le 9,10-dihydro-9,10-dihydroxyanthracène.

9. Procédé selon la revendication 3, dans lequel le composé d'anthrahydroquinone se présente sous la forme d'un sel de métal alcalin.

10. Procédé selon la revendication 5, dans lequel la dispersion du composé d'anthrahydroquinone est introduite dans un liquide s'écoulant dans un tube sous la forme d'une balle dont le volume est suffisant pour fournir un contact du liquide avec un point donné de la canalisation pendant au moins une minute.

11. Procédé selon la revendication 3, dans lequel la balle est introduite dans la canalisation immédiatement après une gueuse.

12. Procédé selon la revendication 5, dans lequel la solution alcaline aqueuse du composé d'anthrahydroquinone est ajoutée en continu dans le liquide en écoulement.

13. Procédé selon la revendication 1, dans lequel le composé d'anthrahydroquinone est métabolisé par les bactéries réductrices de sulfate.
